# EUROPEAN PATENT SPECIFICATION

(11) **EP 0 897 775 B1**
(45) Date of publication and mention of the grant of the patent: **11.10.2000**
(21) Application number: 97109931.2
(22) Date of filing: 18.06.1997
(51) Int. Cl.: B23K 37/02

(54) **Machining vehicle**
Bearbeitungswagen
Chariot d'usinage

(43) Date of publication of application: 24.02.1999
(73) Proprietor: Sumiju Technocenter Co., Ltd., Yokosuka-shi, Kanagawa 237 (JP)
(72) Inventor: Saito, Nobuo, Yokohama-shi, Kanagawa 235 (JP); Ishimoto, Katsuzou, Yokosuka-shi, Kanagawa 239 (JP)
(74) Representative: Boeters, Hans Dietrich, Dr.

(56) References cited:
- PATENT ABSTRACTS OF JAPAN vol. 096, no. 008, 30 August 1996 & JP 08 090288 A (KOIKE SANSO KOGYO CO LTD), 9 April 1996,
- DATABASE WPI Section Ch, Week 9736 Derwent Publications Ltd., London, GB; Class M23, AN 97-388716 XP002047427 & JP 09 168 864 A (SUMIE TECHNO CENT KK) , 30 June 1997

## Description

### BACKGROUND OF THE INVENTION

### Field of the invention:

The present invention relates to a machining vehicle.

### Description of the related art:

A machining vehicle including the features of the first part of claim 1 is known from JP-A-8 090 288.

Conventionally, when a horizontal plate member and a vertical plate member are joined together through a welded joint such as a fillet welded joint or a butt joint, a welding vehicle serving as a machining vehicle is placed on the horizontal plate member serving as a travel surface and is caused to travel along the vertical plate member. To this end, the welding vehicle has a motor, which is driven to rotate drive wheels of the vehicle. Moreover, follower rollers are provided. The follower rollers are caused to rotate while maintaining contact with the vertical plate member, whereby weld line tracking is carried out automatically.

When welding is carried out through use of such a welding vehicle, the welding vehicle must be placed at a weld start point and removed from a weld end point. In order to facilitate such placement and removal of the welding vehicle, a feed apparatus for supplying a welding wire serving as a filler material to a welding torch is disposed at a location separated from the welding vehicle, and the welding wire is fed to the welding torch via a welding torch cable.

During travel of the welding vehicle, the welding torch cable is pulled by the welding vehicle to follow the same. Therefore, if the traction force by which the welding torch cable is pulled is insufficient, the weld line tracking operation cannot be carried out reliably.

In order to increase the traction force, there has been provided a welding vehicle in which drive wheels are formed of an electromagnet or permanent magnet. Also, there has been provided a welding vehicle in which an electromagnet or permanent magnet is disposed at the bottom of the welding vehicle such that during travel a clearance is formed between the electromagnet or permanent magnet and a horizontal plate member.

However, in the conventional welding vehicle having drive wheels formed of an electromagnet or permanent magnet, since the friction coefficient of the surface of the drive wheels becomes small, a sufficient frictional force cannot be generated between the drive wheels and the horizontal plate member. Also, when foreign matter is caught between a drive wheel and the horizontal plate member, the welding vehicle spins, and then becomes unable to continue the weld line tracking. In such case, the welding cannot be continued.

In the conventional welding vehicle in which an electromagnet or permanent magnet is disposed at the bottom, the drive wheels can be made of a rubber material. Therefore, a sufficient frictional force can be generated between the drive wheels and the horizontal plate member. Also, even when foreign matter is caught between a drive wheel and the horizontal plate member, the welding vehicle can travel in a stable manner so as to continue welding properly.

However, since a clearance is present between the electromagnet or permanent magnet and the horizontal plate member, the attraction force of the electromagnet or permanent magnet must be increased with to the size of the clearance.

Accordingly, when an electromagnet is used and a large attraction force is desired, a large electromagnet must be used, resulting in an increase in the size of the welding vehicle.

Moreover, if the clearance between the electromagnet or permanent magnet and the horizontal plate member is decreased in order to increase the attraction force, it becomes impossible for the welding vehicle to travel in a stable manner, in the case, for example, where the horizontal plate member has a weld bead.

On the other hand, when a permanent magnet is used, the magnet is not required to be large because the attraction force of the permanent magnet is relatively large as compared to the weight thereof. However, since a large force is needed to remove the welding vehicle from a weld end point after the completion of welding, handling of the welding vehicle is poor.

In order to overcome this drawback, there is provided a mechanism that enables the welding vehicle to be removed with a small force, wherein the permanent magnet is supported to assume an operation position near the horizontal plate member and a retracted position separated from the horizontal plate member. When welding is completed, a lever is operated through a lever mechanism so as to place the permanent magnet to the retracted position, thereby decreasing the force required to remove the welding vehicle.

However, in order to place the permanent magnet to the retracted position, the lever must be operated against the attraction force of the permanent magnet. Therefore, a large force is required to operate the lever, and the size of the lever mechanism becomes large. Moreover, in order to decrease the force required to remove the welding vehicle, the retracted position must be sufficiently separated from the horizontal plate member, resulting in an increase in the size of the welding vehicle.

### SUMMARY OF THE INVENTION

An object of the present invention is to solve the above-mentioned problems in the conventional machining vehicle and to provide a machining vehicle in which a sufficient frictional force can be generated between drive wheels and a travel surface, which can travel in a stable manner even when foreign matter is caught between the drive wheels and the travel surface, which can be removed with a small force, and which is compact in size.

This object is met by a machining vehicle according to claim 1. Preferred embodiments are disclosed in the dependent claims.

A machining vehicle according to the present invention includes a vehicle body, drive means, wheels rotatably supported by the vehicle body, rotation transmission means for transmitting to the wheels rotation generated by the drive means, and a permanent magnet disposed on the vehicle body. The permanent magnet assumes an operation position at which an attraction force is generated between the permanent magnet and a travel surface, and a retracted position to which the permanent magnet is retracted from the operation position. The machining vehicle further includes a lever connected to the permanent magnet, a machining torch attached to the vehicle body, and a handle fixed to the vehicle body.

When an operator places the machining vehicle on the travel surface and rotates the lever slightly, an attraction force is generated between the permanent magnet and the travel surface, so that the permanent magnet swings down quickly and assumes the operation position.

While the permanent magnet is in the operation position, since the machining vehicle is pressed against the travel surface by the attraction force, a sufficient frictional force can be generated between each wheel and the travel surface.

Accordingly, when the machining vehicle travels, a sufficiently large traction force can be generated.

When the operator operates the lever after the completion of machining so as to move the permanent magnet to the retracted position, the attraction force generated between the permanent magnet and the travel surface decreases to zero, so that the operator can lift the machining vehicle with a small force.

According to the present invention a spring may be provided that urges the permanent magnet toward the retracted position.

In this case, when an operator places the machining vehicle on the travel surface and rotates the lever slightly, an attraction force is generated between the permanent magnet and the travel surface, so that the permanent magnet swings down quickly against the urging force of the spring and assumes the operation position. While the permanent magnet is in the operation position, since the machining vehicle is pressed against the travel surface by the attraction force, a sufficient frictional force can be generated between each wheel and the travel surface.

Accordingly, when the machining vehicle travels, a sufficiently large traction force can be generated.

When the operator grips and tilts the handle after the completion of machining, the machining vehicle is tilted in the same direction, and the permanent magnet located at the operation position is also tilted in the same direction. As a result, the attraction force generated between the permanent magnet and the travel surface decreases, so that the permanent magnet is quickly retracted to the retracted position by the urging force of the spring.

At this time, the attraction force generated between the permanent magnet and the travel surface decreases to zero, so that the operator can lift the machining vehicle with a small force.

According to the present invention, the above-described permanent magnet is swingably supported, and is caused to be parallel to the travel surface at the operation position and to be slanted in relation to the travel surface at the retracted position.

In this case, the attraction force can be decreased by merely rotating the permanent magnet.

According to the present invention, the machining torch may be a welding torch.

### BRIEF DESCRIPTION OF DRAWINGS

The structure and features of the machining vehicle according to the present invention will be readily appreciated as the same and becomes better understood by referring to the drawings, in which:
FIG. 1 is a perspective view of a welding vehicle according to an embodiment of the present invention;
FIG. 2 is a perspective bottom view of the welding vehicle according to the embodiment of the present invention;
FIG. 3 is an enlarged view of a permanent magnet used in the embodiment of the present invention; and
FIG. 4 is a view for explaining the lever function of a handle used in the embodiment of the present invention.

### DESCRIPTION OF THE PREFERRED EMBODIMENT

An embodiment of the present invention will next be described in detail with reference to the drawings.

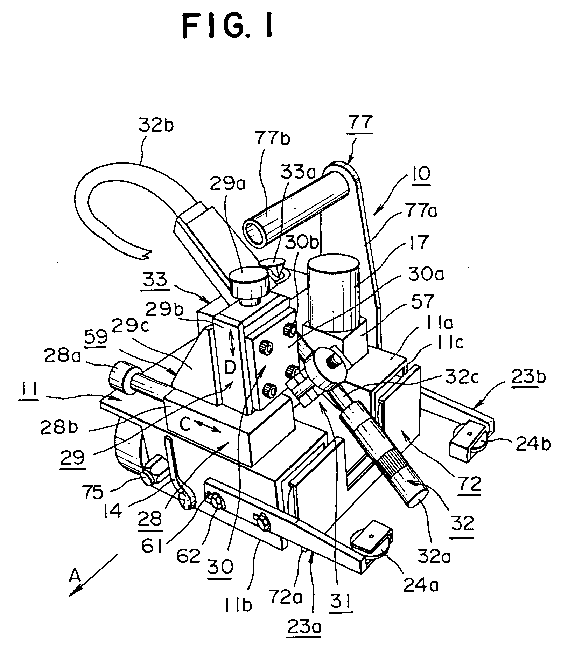

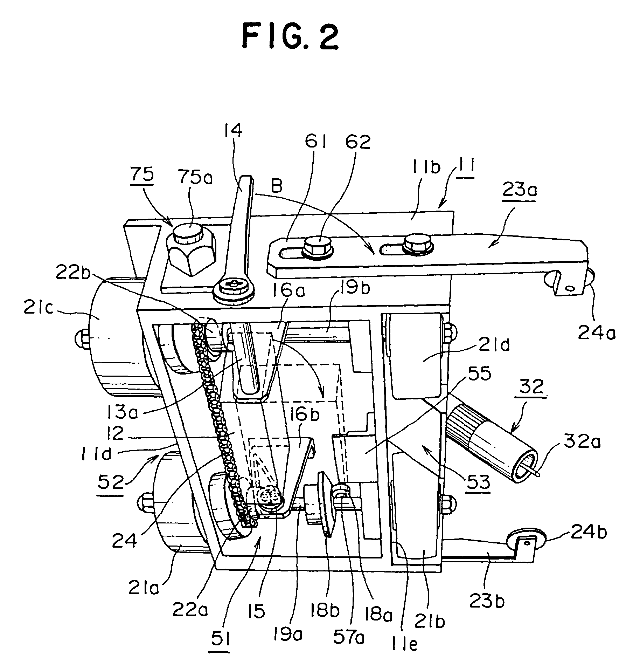

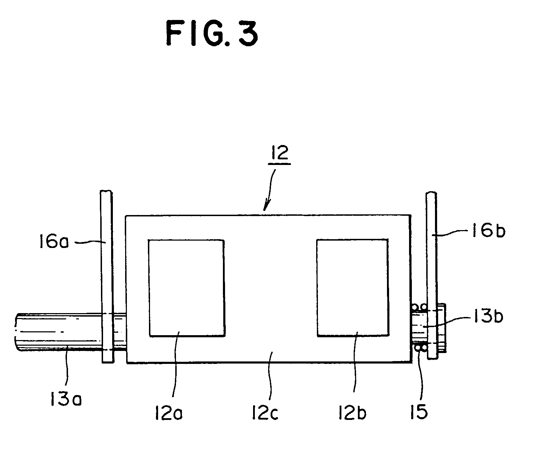

FIG. 1 is a perspective view of a welding vehicle according to the embodiment of the present invention; FIG. 2 is a perspective bottom view of the welding vehicle according to the embodiment of the present invention; and FIG. 3 is an enlarged view of a permanent magnet used in the embodiment of the present invention.

In these drawings, numeral 10 denotes a welding vehicle that serves as a machining vehicle. During welding operation, the welding vehicle 10 is caused to travel in the direction of arrow A on an unillustrated travel surface, such as the top surface of a horizontal plate member. Numeral 11 denotes a vehicle body formed of an aluminum box and composed of a top wall 11a, a front wall 11b, a rear wall 11c, a right wall 11d disposed on the right side with respect to the travel direction, and a left wall 11e disposed on the left side with respect to the travel direction. Under the top wall 11a, a magnet accommodation space 51 is defined by the front wall 11b, the rear wall 11c, the right wall 11d, and the left wall 11e; a right-drive-wheel accommodation space 52 is defined by the right wall 11d; and a left-drive-wheel accommodation space 53 is defined by the front wall 11b, the rear wall 11c, and the left wall 11e.

A permanent magnet 12 is disposed within the magnet accommodation space 51. The permanent magnet 12 is swingably supported by brackets 16a and 16b extending downward from the bottom surface of the top wall 11a. As shown in FIG. 2, the permanent magnet 12 assumes a retracted position indicated by a solid line and an operation position indicted by a broken line.

To allow the swing movement of the permanent magnet 12, rotation shafts 13a and 13b are projected from the front and rear ends of the permanent magnet 12, respectively. The rotation shaft 13a extends forward, penetrating the bracket 16a and the front wall 11b, and a lever 14 is fixed to the rotation shaft 13a outside the magnet accommodation space 51. Similarly, the rotation shaft 13b extends rearward, penetrating the bracket 16b.

In order to prevent the permanent magnet 12 from tilting down from the retracted position toward the right wall 11d, an unillustrated first stopper is attached on the right wall 11d. Also, in order to prevent the permanent magnet 12 from tilting down from the operation position toward the horizontal plate member, a second stopper 55 is attached on the left wall 11e in such a manner that it extends horizontally from the left wall 11e.

Between the permanent magnet 12 and the bracket 16b is disposed a spring, for example, a coil spring 15, which surrounds the rotation shaft 13b and which urges the permanent magnet 12 toward the retracted position.

Accordingly, when the lever 14 is rotated in the direction of arrow B through a predetermined angle so as to tilt the permanent magnet 12 through the same angle, the permanent magnet 12 quickly swings down through 90 degrees against the urging force of the coil spring 15 by the attraction force generated between the permanent magnet 12 and the horizontal plate member, and hits the second stopper 55, so that the permanent magnet 12 stops at the operation position. During such a motion, the lever 14 is rotated through 90 degrees following the permanent magnet 12, so that no force is required to operate the lever 14.

As described above, since the permanent magnet 12 can be placed at the operation position by rotating the lever 14 through a predetermined angle with a small force, operation of the welding vehicle 10 can be facilitated.

When the welding vehicle 10 is not placed on the horizontal plate material, no attraction force is generated between the permanent magnet 12 and the horizontal plate member. In this state, even if the permanent magnet 12 is placed at the operation position by rotating the lever 14 through 90 degrees, when the lever 14 is released, the permanent magnet 12 quickly stands up to the retracted position due to the urging force of the coil spring 15. During such a motion, the lever 14 is rotated following the permanent magnet 12, so that no force is required to operate the lever 14.

The permanent magnet 12 is composed of two magnetic poles 12a and 12b and a yoke 12c. The magnetic poles 12a and 12b are exposed on one face of the permanent magnet 12 but are surrounded by the yoke 12c at the remaining faces thereof. Accordingly, magnetic flux is generated on only the face on which the magnetic poles 12a and 12b are exposed, in such a way that the magnetic flux connects the magnetic poles 12a and 12b.

When the permanent magnet 12 is placed at the operation position, magnetic paths are formed between the magnetic poles 12a and 12b and the horizontal plate member, so that leakage flux can be mostly eliminated. Accordingly, the attraction force produced by the permanent magnet 12 can be increased. When the permanent magnet 12 is tilted, the number of the magnetic paths formed between the magnetic poles 12a and 12b and the horizontal plate member decreases accordingly, so that the attraction force produced by the permanent magnet 12 is decreased. When the permanent magnet 12 is placed at the retracted position, almost no magnetic paths are formed between the magnetic poles 12a and 12b and the horizontal plate member, so that no attraction force is generated by the permanent magnet 12.

Since the depth of the magnetic paths in the horizontal plate member can be increased by increasing the distance between the magnetic poles 12a and 12b of the permanent magnet 12, the attraction force of the permanent magnet 12 can be increased accordingly.

On the top wall 11a of the rear end portion of the vehicle body 11 is disposed a speed reducer 57, on which a motor 17 serving as a drive means is disposed. Rotational motion generated by the motor 17 is deceralated by the speed reducer 57, and is output to an output shaft 57a of the speed reducer 57. To the output shaft 57a is fixed a drive bevel gear 18a, which is meshed with a driven bevel gear 18b fixed to a rear-wheel drive shaft 19a. The number of teeth of the drive bevel gear 18a is set to be smaller than the number of teeth of the driven bevel gear 18b. Accordingly, the rotation of the output shaft 57a is transmitted to the rear-wheel drive shaft 19a via the drive and driven bevel gears 18a and 18b, by which the rotational speed is further reduced.

At the rear end of the vehicle body 11, the rear-wheel drive shaft 19a is rotatably supported by the vehicle body 11 via unillustrated bearings. The right end of the rear-wheel drive shaft 19a extends outward, penetrating the right wall 11d, and a rear-right wheel 21a is fixed to the drive shaft 19a outside the magnet accommodation space 51. The left end of the rear-wheel drive shaft 19a extends outward, penetrating the left wall 11e, and a rear-left wheel 21b is fixed to the drive shaft 19a outside the magnet accommodation space 51.

The vehicle body 11 is propelled in a four-wheel drive scheme, in which the rotation transmitted to the rear-wheel drive shaft 19a is transmitted to a front-right wheel 21c and a front-left wheel 21d, respectively. To this end, at the front end of the vehicle body 11, a front-wheel drive shaft 19b is rotatably supported by the vehicle body 11 via unillustrated bearings. The right end of the front-wheel drive shaft 19b extends outward, penetrating the right wall 11d, and the front-right wheel 21c is fixed to the drive shaft 19b outside the magnet accommodation space 51. The left end of the front-wheel drive shaft 19b extends outward, penetrating the left wall 11e, and the front-left wheel 21d is fixed to the drive shaft 19b outside the magnet accommodation space 51.

Sprockets 22a and 22b are fixed to the rear-wheel and front-wheel drive shafts 19a and 19b, respectively, and a chain 24 is provided between the sprockets 22a and 22b in a tensioned state.

The above-described structure enables the rotation generated by driving the motor 17 to be transmitted to the wheels 21a - 21d via rotation transmission means composed of the drive and driven bevel gears 18a and 18b, the rear-wheel drive shaft 19a, the sprockets 22a and 22b, the chain 24, and the front-wheel drive shaft 19b. Accordingly, all the wheels 21a - 21d serve as drive wheels for propelling the welding vehicle 10. The above-described drive system may be modified such that only the rear wheels 21a and 21b or only the front wheels 21c and 21d are used as drive wheels.

Since the wheels 21a - 21d are all formed of a rubber material, sufficient frictional force can be generated between the wheels 21a - 21d and the horizontal plate member, and the welding vehicle 10 can travel in a stable manner even when foreign matter is caught between one of the wheels 21a - 21d and the horizontal plate member.

When the clearance between the permanent magnet 12 and the horizontal plate member is set to about 7 mm, the attraction force generated by the permanent magnet 12 becomes about 10 kg. Since the weight of the welding vehicle 10 is about 8 kg, a force of about 18 kg can be applied between the wheels 21a - 21d and the horizontal plate member.

In order to allow the welding vehicle 10 to carry out welding while traveling, a welding torch 32 serving as a machining torch is disposed at the central portion of the vehicle body 11 in such a way that it is slanted downward in a direction from the right wall 11d toward the left wall 11e. The welding torch 32 is fixed to a mount state adjusting unit 59 via a torch clamp (torch holder) 31. A welding wire 32a serving as a filler material is projected from the tip of the welding torch 32. To the rear end of the welding torch 32 is connected a welding torch cable 32b. The welding wire 32a is fed from an unillustrated feeder via the welding torch cable 32b.

Since the torch clamp 31 clamps a pipe portion 32c of the welding torch 32 such that the pipe portion 32c is curved, the welding torch 32 itself is prevented from rotating when the welding torch cable 32b is pulled.

The mount state adjusting unit 59 serves to position the tip of the welding torch 32 correctly at a welding point, and is composed of a forward/backward position adjusting unit 28 for moving the tip of the welding torch 32 in the forward/backward direction (in the rightward/leftward direction with respect to the travel direction of the welding vehicle 10), a vertical position adjusting unit 29 for moving the tip of the welding torch 32 in the vertical direction, and an angle adjusting bracket 30 for changing the inclination of the welding torch 32.

The forward/backward position adjusting unit 28 is composed of a knob 28a and a movement block 28b. In the movement block 28b, there is provided an unillustrated trapezoidal screw, which is rotated by the knob 28a. On the surface of the top wall 11a is formed an unillustrated rack which is meshed with the trapezoidal screw. Accordingly, when the knob 28a is rotated, the movement block 28b is moved in the direction of arrow C (in the rightward/leftward direction with respect to the travel direction of the welding vehicle 10).

The vertical position adjusting unit 29 is composed of a knob 29a, a movement block 29b, and a fixation block 29c fixed to the movement block 28b of the forward/backward position adjusting unit 28. In the movement block 29b, there is provided an unillustrated trapezoidal screw, which is rotated by the knob 29a. On the surface of the fixation block 29c is formed an unillustrated rack, which is meshed with the trapezoidal screw. Accordingly, when the knob 29a is rotated, the movement block 29b is moved in the direction of arrow D (in the vertical direction).

The angle adjusting bracket 30 is composed of a rectangular adjusting plate 30a disposed parallel to the movement block 29b, screws 30b for fixing the adjusting plate 30a to the movement block 29b at the four corners of the adjusting plate 30a, unillustrated adjusting screws disposed on a side surface of the movement block 29b, and an unillustrated fan-shaped adjusting plate. Therefore, the angle of the welding torch 32 can be adjusted by rotating the adjusting screws.

At the rear end of the vehicle body 11, a control box 33 is fixed on the top wall 11a so as to be adjacent to the speed reducer 57 and the motor 17. Various kinds of knobs 33a are provided on the control box 33. Through operation of the knobs 33a, the welding vehicle 10 is started and stopped, the traveling speed is changed, and welding is started and stopped.

In order to allow the welding vehicle 10 to travel along an unillustrated vertical plate member, a pair of arms 23a and 23b are disposed on the left side of the welding vehicle 10 such that they project toward the vertical plate member. Follower rollers 24a and 24b are rotatably supported by the arms 23a and 23b, respectively. Accordingly, when the welding vehicle 10 is traveling, the follower rollers 24a and 24b are rotated while being in contact with the vertical plate member, thereby enabling weld line tracking to be carried out automatically.

The arms 23a and 23b are fixed to the front and rear walls 11b and 11c, respectively, with bolts 62. The projection length of the arms 23a and 23b can be adjusted so as to adjust the positions of the follower rollers 24a and 24b with respect to the vehicle body 11. To this end, elongated groove 61 is formed in the rear end portion of each of the arms 23a and 23b, and the bolt 62 is passed through the elongated groove 61. Upon loosening the bolt 62, each of the arms 23a and 23b can be moved in the horizontal direction.

In the present embodiment, the arms 23a and 23b can be moved in only the horizontal direction. However, instead of the elongated groove 61, H-shaped groove may be formed in each of the arms 23a and 23b so as to allow the arms 23a and 23b to be moved in the vertical direction as well as in the horizontal direction.

When the welding vehicle 10 having the above-described structure is caused to travel along the vertical plate member and welding is performed by the welding torch 32, metal melted due to the welding may scatter. When the scattered metal solidifies and the solidified metal piece enters the left-drive-wheel accommodation space 53 and is caught between one of the wheels 21a - 21d and the horizontal plate member, the welding vehicle 10 spins and becomes unable to continue the weld line tracking. In such case, the welding cannot be continued.

In order to solve the above-described problem, as shown in FIG. 1, a skirt 72 is disposed on the left side of the left-drive-wheel accommodation space 53. The skirt 72 is not shown in the other drawings in order to facilitate the understanding of the structure. The skirt 72 covers the left-drive-wheel accommodation space 53. Since the skirt 72 is attached to the vehicle body 11 in a vertically movable manner, the lower end of the skirt 72 always slides on the horizontal plate member during travel of the welding vehicle 10.

At least the front-lower end portion 72a of the skirt 72 has a curved shape. This allows the welding vehicle 10 to easily pass over a weld bead or the like formed on the horizontal plate member.

In order to stop the welding vehicle 10 when the welding vehicle 10 reaches a weld end point, a stop switch 75 is disposed on the front wall 11b. The stop switch 75 has a press portion 75a that is always urged forward by means of an unillustrated spring or the like. At the weld end point, an unillustrated stopper is disposed in advance at a position that faces the press portion 75a.

Accordingly, when the welding vehicle 10 reaches the weld end point, the press portion 75a is pressed by the stopper against the urging force of the spring, so that the stop switch 75 is turned off. As a result, the motor 17 is stopped, thereby stopping the welding vehicle 10.

A handle 77 is attached to the rear wall 11c of the vehicle body 11. The handle 77 is composed of a vertical portion 77a extending upward from the rear wall 11c, and a grip portion 77b fixed to the upper end of the vertical portion 77a. The grip portion 77b extends forward to a point between the center and the front end of the vehicle body 11.

The handle 77 has a function as an ordinary handle which allows an operator to grasp the grip portion 77b in order to carry the welding vehicle 10 after the completion of welding, as well as a function as a lever for placing the permanent magnet 12 at the retracted position.

Next, the lever function of the handle 77 will be described.

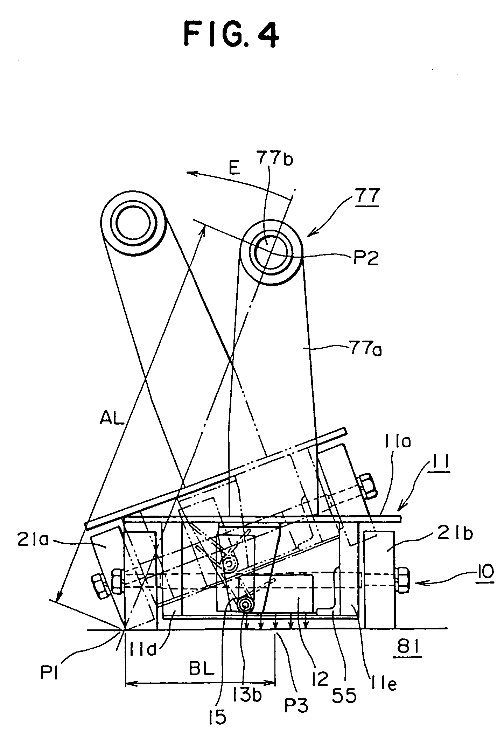

FIG. 4 is a view for explaining the lever function of the handle used in the embodiment of the present invention.

In FIG. 4, numeral 10 denotes the welding vehicle, 11 denotes the vehicle body, 11a denotes the top wall of the vehicle body 11, 11d denotes the right wall of the vehicle body 11, 11e denotes the left wall of the vehicle body 11, 12 denotes the permanent magnet, 13b denotes the rotation shaft, 15 denotes the coil spring, 21a denotes the rear-right wheel, 21b denotes the rear-left wheel, 55 denotes the second stopper, 77 denotes the handle, 77a denotes the vertical portion of the handle 77, 77b denotes the grip portion of the handle 77, and 81 denotes the horizontal plate member.

As described above, while the welding vehicle 10 is traveling on the horizontal plate member 81, the permanent magnet 12 assumes the operation position by the attraction force generated between the permanent magnet 12 and the horizontal plate member 81, against the urging force of the coil spring 15.

While the permanent magnet 12 is in the operation position, the welding vehicle 10 is pressed against the horizontal plate member 81 by the attraction force, so that a sufficiently large frictional force can be generated between the wheels 21a - 21d (see FIG. 2) and the horizontal plate member 81.

When the welding vehicle 10 travels, the welding torch cable 32b (see FIG. 1) is pulled by the welding vehicle 10, so that the welding torch cable 32b moves to follow the welding vehicle 10. At this time, since the welding vehicle 10 produces a sufficiently large traction force for pulling the welding torch cable 32b, the weld line tracking operation can be carried out reliably.

After the completion of welding, the operator grasps the grip portion 77b and tilts the handle 77 in the direction of arrow E through an angle of, for example, about 5 degrees. With this operation, the welding vehicle 10 is inclined in the same direction about a point P1, which is the right-lowermost point of the wheels 21a, so that the permanent magnet 12 in the operation position is also inclined in the same direction and becomes non-parallel with respect to the horizontal plate member 81.

As a result, the attraction force generated between the permanent magnet 12 and the horizontal plate member 81 decreases, and then the permanent magnet 12 is urged by the coil spring 15 to quickly stand up to the retracted position. During this motion, since the lever 14 is rotated following the permanent magnet 12, no force is needed to operate the lever 14. Alternatively, the permanent magnet 12 can be rotated by operating the lever 14 instead of tilting the handle 77.

When the distance between the point P1 and the center P2 of the grip portion 77b is represented by AL and the distance between the point P1 and a point P3 on the horizontal plate member 81 corresponding to the center of the permanent magnet 12 is represented by BL, the distance AL becomes about three times the distance BL. Accordingly, the welding vehicle 10 can be inclined by only applying to the grip portion 77b a force that is one-third of the attraction force generated by the permanent magnet 12, so as to place the permanent magnet 12 to the retracted position.

In the present embodiment, the permanent magnet 12 is placed in the retracted position by an operator's operation of inclining the handle 77 in the direction of arrow E. Alternatively, after grasping the grip portion 77b, the operator may incline the handle 77 in the direction opposite the direction of arrow E in order to place the permanent magnet 12 in the retracted position.

In the present embodiment, the welding vehicle 10 is used as a machining vehicle, and the welding torch 32 is mounted on the welding vehicle 10 in order to carry out welding. However, a gas cutting vehicle may alternatively be used as the machining vehicle, and a gas cutting torch may be mounted on the gas cutting vehicle in order to carry out gas cutting.

In the present embodiment, the machining vehicle travels on a horizontal plate member. However, the machining vehicle may alternatively travel on a vertical plate member.

The present invention is not limited to the above-described embodiments. Numerous modifications and variations of the present invention are possible within the scope of the present invention as defined by the claims.

## Claims

1. A machining vehicle comprising:
(a) a vehicle body (11);
(b) drive means (17);
(c) wheels (21a-21d) rotatably supported by said vehicle body;
(d) rotation transmission means (18a,18b,19a,19b,22a, 22b,24) for transmitting to said wheels rotation generated by said drive means;
(e) a permanent magnet (12) disposed on said vehicle body, said permanent magnet assuming an operation position at which an attraction force is generated between said permanent magnet and a travel surface, and a retraced position to which said permanent magnet is retracted from the operation position;
(f) a lever (14) connected to said permanent magnet;
(g) a machining torch (32) attached to said vehicle body; and
(h) a handle (77) fixed to said vehicle body;
**characterized in that**
the lever (14) is capable of swinging said permanent magnet, and
said permanent magnet (12) is swingably supported, and is caused to be parallel to the travel surface to increase an attraction force at the operation position, and to be slanted in relation to the travel surface to decrease the attraction force at the retracted position.

2. The machining vehicle according to Claim 1, further comprising a spring that urges said permanent magnet (12) toward the retracted position.

3. The machining vehicle according to Claim 1 or 2, wherein said machining torch is a welding torch (32).

## Patentansprüche

1. Bearbeitungsfahrzeug, welches umfaßt:
(a) einen Fahrzeugrumpf (11);
(b) Antriebsmittel (17);
(c) Räder (21a-21d), die von dem genannten Fahrzeugrumpf rotierbar gestützt werden;
(d) Rotationsübertragungsmittel (18a, 18b, 19a, 19b, 22a, 22b, 24) um auf die genannten Räder die durch die genannten Antriebsmittel erzeugte Rotation zu übertragen;
(e) ein am genannten Fahrzeugrumpf angeordneter Permanentmagnet (12), wobei der genannte Permanentmagnet eine Betriebsstellung, in der eine Anziehungskraft zwischen dem genannten Permanentmagneten und einer Fahroberfläche erzeugt wird, und eine zurückgezogene Stellung, in welche der genannte Permanentmagnet aus der Betriebsstellung zurückgezogen wird, annimmt;
(f) ein mit dem genannten Permanentmagneten verbundener Hebel (14)
(g) ein am genannten Fahrzeugrumpf befestigter Bearbeitungsbrenner (32)
und
(h) ein am genannten Fahrzeugrumpf befestigter Griff (77)
**dadurch gekennzeichnet, dass**
der Hebel (14) zum Schwenken des genannten Permanentmagneten geeignet ist und der genannte Permanentmagnet (12) schwenkbar gestützt ist und hierdurch parallel zur Fahroberfläche gestellt werden kann, um eine Anziehungskraft in der Betriebsstellung zu vergrößern und bezüglich der Fahroberfläche geneigt werden kann, um die Anziehungskraft in der zurückgezogenen Stellung zu vermindern.

2. Bearbeitungsfahrzeug nach Anspruch 1, welches ferner eine Feder umfaßt, die den genannten Permanentmagneten (12) in die zurückgezogene Stellung bringt.

3. Bearbeitungsfahrzeug nach Anspruch 1 oder 2, bei welchem der genannte Bearbeitungsbrenner ein Schweißbrenner ist.

## Revendications

1. Véhicule d'usinage comprenant :
(a) un corps de véhicule (11) ;
(b) des moyens d'entraînement (17) ;
(c) des roues (21a-21d) supportées en rotation par ledit corps de véhicule ;
(d) des moyens de transmission de rotation (18a, 18b, 19a, 19b, 22a, 22b, 24) pour transmettre aux dites roues la rotation engendrée par lesdits moyens d'entraînement ;
(e) un aimant permanent (12) disposé audit corps de véhicule, cet aimant permanent présentant une position de fonctionnement pour laquelle une force d'attraction est engendrée entre ledit aimant permanent et une surface de déplacement, et une position de retrait pour laquelle l'aimant permanent est en retrait de la position de fonctionnement ;
(f) un levier (14) connecté audit aimant permanent ;
(g) une torche d'usinage (32) fixée audit corps de véhicule ; et
(h) une poignée (77) fixée audit corps de véhicule ;
**caractérisé en ce que**
le levier (14) est capable de faire osciller ledit aimant permanent, et
ledit aimant permanent (12) est supporté de façon oscillante et est agencé pour être parallèle à la surface de déplacement pour accroître la force d'attraction dans la position de fonctionnement, et pour être incliné par rapport à la surface de déplacement pour décroître la force d'attraction en position de retrait.

2. Véhicule d'usinage selon la revendication 1 comprenant, en outre, un ressort qui pousse ledit aimant permanent (12) vers la position de retrait.

3. Véhicule d'usinage selon la revendication 1 ou 2 dans lequel ladite torche d'usinage est une torche de soudage (32).
